# EUROPEAN PATENT SPECIFICATION

(11) **EP 0 591 537 B1**
(45) Date of publication and mention of the grant of the patent: **20.11.1996**
(21) Application number: 92913390.8
(22) Date of filing: 26.06.1992
(51) Int. Cl.: H01C 7/02, H01C 1/084, H05B 3/14

(54) **THERMISTER DEVICE OF POSITIVE CHARACTERISTIC**
THERMISTOR MIT POSITIVER CHARAKTERISTIK
THERMISTANCE A COEFFICIENT DE TEMPERATURE POSITIF

(30) Priority: 26.06.1991 JP 57211/91 U; 26.06.1991 JP 57212/91 U
(43) Date of publication of application: 13.04.1994
(73) Proprietor: TDK Corporation, Chuo-ku, Tokyo-to 103 (JP); FUMAKILLA LIMITED, Tokyo (JP)
(72) Inventor: TAKEUCHI, Michikazu TDK Corporation, Chuou-ku Tokyo 103 (JP); MIURA, Akira TDK Corporation, Chuou-ku Tokyo 103 (JP); SATOH, Takeyoshi TDK Corporation, Tokyo 103 (JP); NOHARA, Hiroshi TDK Corporation, Chuou-ku Tokyo 103 (JP)
(74) Representative: Dealtry, Brian
(86) International application number: JP9200811
(87) International publication number: WO9300689

(56) References cited:
- FR-A- 2 580 451
- JP-A- 3 064 883
- JP-A- 3 187 178
- JP-U- 1 092 793
- JP-Y- 3 031 041

## Description

### TECHNICAL FIELD

This invention relates to positive characteristic thermistor devices used for liquid type electric mosquito destroyers or the like.

### BACKGROUND ART

In a liquid type electric mosquito destroyer, vapor of a liquid insecticide is dispersed from a liquid withdrawal wick, in which the liquid insecticide is permeated by the capillary phenomenon, by heating the periphery of the wick. For heating the liquid withdrawal wick, a positive characteristic thermistor device is used. Japanese Utility Model Application Laid-Open No. 129794/1987 discloses a pertaining positive characteristic thermistor device, which comprises a case, a positive characteristic thermistor, electrode terminals and a heat radiation member. The case has a recess, which is open opposite the bottom thereof. The positive characteristic thermistor has electrodes provided on its opposite side surfaces, and it is disposed in the recess such that the electrodes are directed toward the bottom and the opening of the recess, respectively.

The electrode terminals are overlapped on the respective electlode of the positive characteristic thermistor and led out to the outside through the bottom of the case. The heat radiation member is disposed on the opening side of the case via an electric insulator member. The heat radiation member has a flat heat collector and a cylindrical heat radiator, the heat collector being disposed on the electric insulator member and thermally coupled via the same to the positive characteristic thermistor. The cylindrical heat radiator, in which a liquid withdrawal wick is inserted, is provided as a portion of the heat collector led out to the outside of the case.

According to this prior art, it is possible to provide a liquid type electric mosquito destroyer, in which the outer periphery of the liquid withdrawal wick permeated by the liquid insecticide is heated with the cylindrical heat radiator.

In this type of positive characteristic thermistor device, it is necessary to elevate the temperature of the cylindrical heat radiator accommodating the liquid withdrawal wick thereon up to a temperature required for the thermal dispersion of the liquid chemical. On the other hand, the switching temperature of the positive characteristic thermistor is desirably as low as possible. The lower the switching temperature required for the positive characteristic thermistor, such advantages are obtainable that it is possible to use the smaller size positive characteristic thermistor and that the power consumption is the lower.

However, with the above prior art positive characteristic thermistor device the cylindrical heat radiator is provided on a portion of the heat collector that is led to the outside of the case, and therefore it imposes a limitation on the improvement of the efficiency of heat conduction from the heat collector to the hear radiator. In order to ensure the necessary heat generation temperature of the cylindrical heat radiator, it is necessary to use a positive characteristic thermistor with a high switching temperature, typically about 220°C. Therefore, limitations have been imposed on the reduction of the size and power consumption of the positive characteristic thermistor. A positive characteristic thermistor with a switching temperature of 220°C roughly has a diameter of about 10 mm and a thickness of about 3 mm and consumes power of about 3.9 W.

### DISCLOSURE OF THE INVENTION

An object of the invention is to provide a positive characteristic thermistor device, which has a high efficiency of heat conduction from positive characteristic thermistor to cylindrical heat radiator and is suited for reduction of the size and power consumption.

To attain the above object, the positive characteristic thermistor according to the present invention comprises the features claimed in claim 1.

With the positive characteristic thermistor accommodated in and thermally coupled to the outer fitting, heat generated in the thermistor is transmitted to the outer fitting. Since the heat radiator includes the cylindrical heat radiation member having the flat heat coupling portion in surface contact with an outer surface of the outer fitting, heat generated in the positive characteristic thermistor is efficiently transmitted to the cylindrical heat radiation member via the flat heat coupling portion in surface contact with the outer surface of the outer fitting. Thus, the efficiency of heat conduction from the positive characteristic thermistor to the cylindrical heat radiation member, in which a liquid withdrawal wick for withdrawing a liquid chemical, is increased. It is thus possible to use a positive characteristic thermistor, the switching temperature of which is low, and which is small in size and consumes low power.

Further, since the outer fitting is made of an electric insulator material, in which the positive characteristic thermistor is accommodated, it is possible to obtain reliable electric insulation and protection of the positive characteristic thermistor.

Further, since the electrode terminals are connected to the positive characteristic thermistor inside the outer fitting and led out to the outside thereof, it is possible to supply power to the thermistor through the electrode terminals without possibility of spoiling the electric insulation and protection functions with respect to the positive characteristic thermistor.

### BRIEF DESCRIPTION OF THE DRAWINGS

Fig. 1 is an exploded perspective view showing an essential part of a positive characteristic thermistor device according to the invention;
Fig. 2 is a sectional view showing the positive characteristic thermistor device according to the invention in the assembled state;
Fig. 3 is a plan view showing the positive characteristic thermistor device according to the invention in the assembled state;
Fig. 4 is a bottom view showing the positive characteristic thermistor device according to the invention in the assembled state;
Fig. 5 is a view showing the positive characteristic thermistor device according to the invention in use;
Fig. 6 is a perspective view showing a specific example of heat radiator used for the positive characteristic thermistor device according to the invention;
Fig. 7 is a sectional view showing the specific example of heat radiator used for the positive characteristic thermistor device according to the invention;
Fig. 8 is an exploded perspective view showing a different embodiment of the positive characteristic thermistor device according to the invention;
Fig. 9 is a sectional view showing the different embodiment of the positive characteristic thermistor device according to the invention;
Fig. 10 is an enlarged-scale perspective view showing the different example of the heat radiator used for the positive characteristic thermistor device according to the invention;
Fig. 11 is a sectional view showing a heat radiator in the different embodiment of the positive characteristic thermistor device according to the invention;
Fig. 12 is a plan view showing a further embodiment of the positive characteristic thermistor device according to the invention; and
Fig. 13 is a sectional view showing a further embodiment of the positive characteristic thermistor device according to the invention.

### BEST MODE FOR CARRYING OUT THE INVENTION

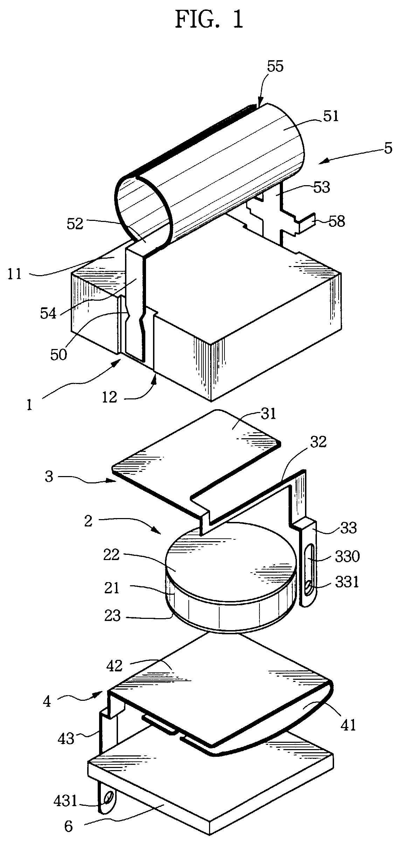

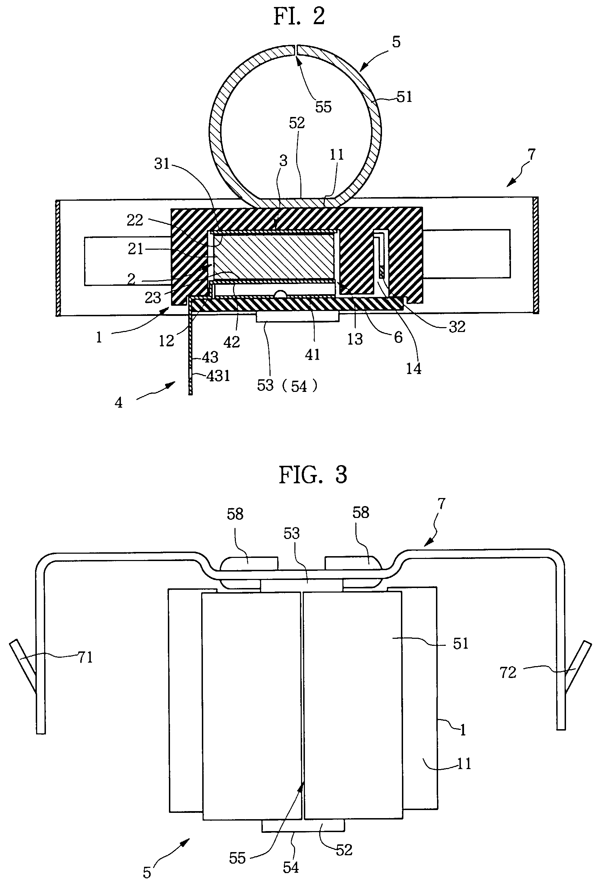

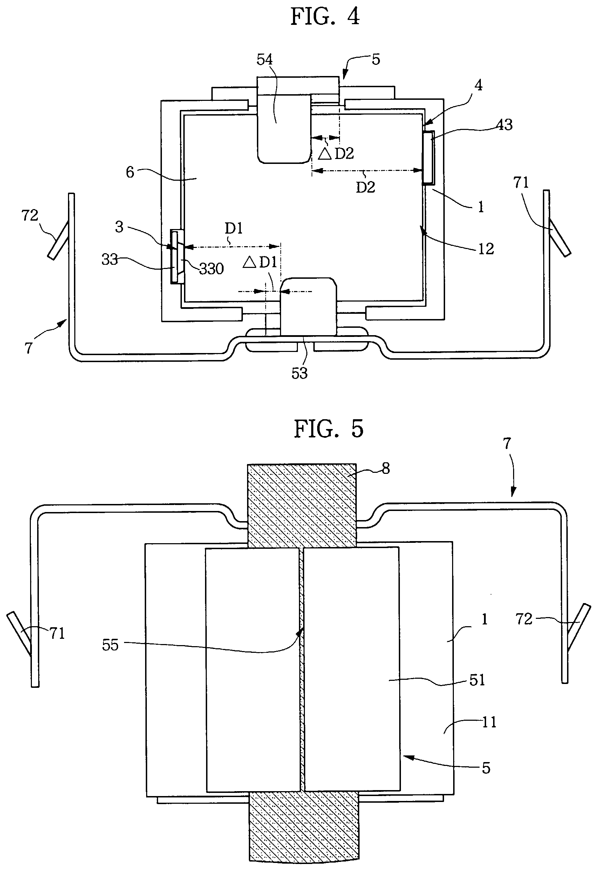

Referring to Figs. 1 to 7, designated at 1 is a case, at 2 a positive characteristic thermistor, at 3 and 4 paired electrode terminals, at 5 a heat radiator, at 6 a lid, and at 7 a mounting member.

The case 1 and lid 6 are made of an electric insulator material and constitute an outer fitting. The case 1 has a recess 13 having a bottom 11 and an opening 12 thereopposite. It is made of an electric insulator material excellent in the thermal conductivity and chemical resistance, for instance alumina. Its bottom 11 is constituted by a sealed wall free from any pore, hole or aperture. The lid 6 closes the opening 12 of the case 1.

The positive characteristic thermistor 2 is accommodated in the case 1 constituting the outer fitting and thermally coupled to the outer fitting. It comprises a disk-like element 21 with electrodes 22 and 23 provided on its opposite side surfaces, being disposed in the recess 13 such that the electrodes 22 and 23 are directed toward the bottom 11 and opening 12, respectively. The positive characteristic thermistor 2 may have a circular, rectangular or any other shape.

The electrode terminals 3 and 4 are connected in the outer fitting constituted by the case 1 and the lid 6 to the respective electrodes 22 and 23 of the positive characteristic thermistor 2 and led out to the outside of the outer fitting. They are overlapped over the respective electrodes 22 and 23 of the positive characteristic thermistor 2 in the recess of the case 1 and led out to the outside of the outer fitting from the opening 12. They are desirably made from a thin plate of such metal as stainless steel. Of the electrode terminals 3 and 4, the electrode terminal 3, which is in contact with the electrode 22 disposed on the side of the bottom 11 of the case 1, has an electrode contact portion 31, a narrow portion 32 and a terminal portion 33. The electrode contact portion 31 is flat. The narrow portion 32 extends along and at a spacing from one edge of the electrode contact portion 31 and has one end joining the same portion 31. It is adapted to be broken by an over-current. Thus, the electrode terminal 3 is made from a thin plate corresponding to an over-current breakage value. The terminal portion 33 is bent like a crankshaft. It extends in a direction substantially normal to the surface of the electrode contact portion 31 and has one end joining the other end of the narrow portion 32. It has a raised portion 330 raised from one side toward the other side. The raised portion 330 has a hole 331 near an end of it.

The electrode terminal 4 is disposed on the side of the opening 12 and in contact with the electrode 23. It has a spring portion 41 and a flat portion 42. The flat portion 42 is held in forced contact with the electrode 23 by making use of the spring pressure of the spring portion 41. A terminal portion 43, bent like a crankshaft, extends from an edge of the flat portion 42. It has a hole 431 near its other end. The electrode terminal 4, unlike the electrode terminal, is not adapted to be broken by any over-current. Thus, it is usually thick compared to the electrode terminal 3.

The heat radiator 5 has a cylindrical heat radiation member 51, which has a flat heat coupling portion 52 disposed on the side of and in surface contact with the bottom 11 of the case 1 constituting the outer fitting. Thus, heat generated in the positive characteristic thermistor 2 is efficiently transmitted to the cylindrical heat radiation member 51 through the flat heat coupling portion 52. A thermally conductive resin such as a silicone resin is desirably provided between the heat coupling portion 52 and the bottom 11.

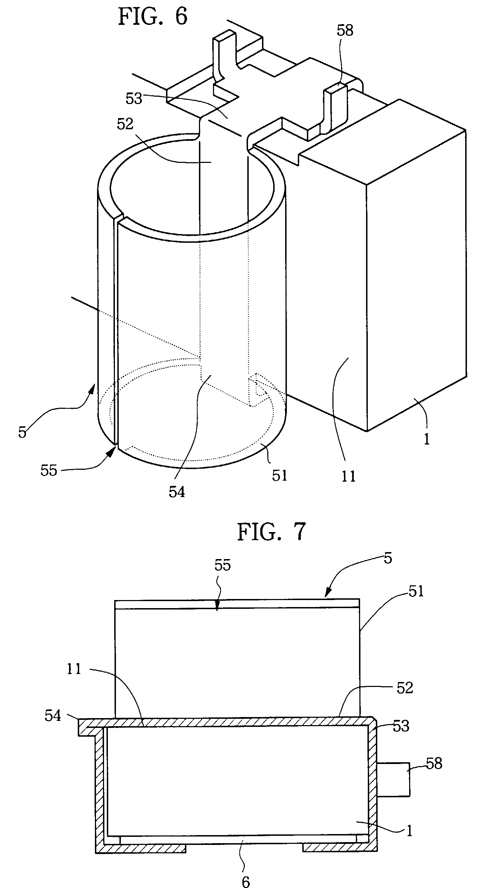

Referring to Figs. 6 and 7, the heat radiator 5 is formed by using a plate of a good heat conductor metal, for instance an aluminum plate. It has folding portions 53 and 54 extending from its opposite ends. The folding portions 53 and 54 are adapted to embrace the case 1 by being folded toward the side of the opening 12. The cylindrical heat radiation member 51 has an axial slit 55. The slit 55 is formed as narrow as possible in order to provide for a constant heat distribution in the cylindrical heat radiation member 51. The folding portion 54 has a notch 50 formed in one or each edge of it (see Fig. 1). The portion formed with the notch or notches 50 is utilized as a bending portion. The other folding portion 53 of the heat radiator 5 has arm portions 58 extending from its opposite edges.

The lid 6 is disposed such as to close the opening 12 of the case 1. It is received in a stepped portion formed around the recess 13 of the case 1. The terminal portions 33 and 43 of the electrode terminals 3 and 4 are led out to the outside of the outer fitting through a gap formed in the stepped portion between the lid 6 and case 1. The contact surfaces of the lid 6 and case 1 and also the gap forming portions thereof, through which the terminal portions 33 and 43 are led out, are sealed to one another using a heat-resistant resin or the like. The mounting member 7 has through holes, and it is secured to the heat radiator with the arm portions 58, which penetrate the through holes noted above. The mounting member 7 is made from a plate of stainless steel or like metal having high mechanical strength and excellent chemical resistance.

In assembling, the electrode terminal 3 is first disposed in the recess 13 of the case 1, i.e., on the inner surface of the bottom 11, and then the positive characteristic thermistor 2, electrode terminal 4 and lid 6 are stacked in the mentioned order on the electrode terminal 3. The heat radiator 5 is disposed on the outer surface of the bottom 11 of the case 1, and the folding portions 53 and 54 are folded to be secured to the outer surface of the lid 6, whereby the components are elastically supported and secured by the elastic force of the electrode terminal 4. Then, the mounting member 7 is coupled to the heat radiator 5 using the arm portions 58.

The folding portions 53 and 54 are retreated in their portions corresponding to the electrode terminals 3 and 4 by Δ D1 and Δ D2 in a direction of increasing their distances D1 and D2 from the electrode terminals 3 and 4.

Fig. 5 is a view showing the positive characteristic thermistor device according to the invention in use.

A liquid withdrawal wick 8 for withdrawing an insecticide or the like, is inserted in the cylindrical heat radiation member 51. When the liquid withdrawal wick 8 is heated from around it, it thermally disperses an insecticidal component. The lower end of the liquid withdrawal wick 8 is dipped in a liquid insecticide container (not shown).

As shown, since the positive characteristic thermistor 2 is accommodated in and thermally coupled to the outer fitting constituted by the case 1 and lid 6, heat generated in the thermistor 2 can be reliably transmitted to the outer fitting 1. In addition, since the heat radiator 5 has the flat heat coupling portion 52 in surface contact with the outer surface of the bottom 11 of the case 1 constituting the outer fitting, heat generated from the positive characteristic thermistor 2 can be efficiently transmitted to the cylindrical heat radiation member 51. Thus, high efficiency of heat conduction from the thermistor 2 to the cylindrical heat radiation member 51 with the liquid withdrawal wick inserted therein is increased. It is thus possible to use as the positive characteristic thermistor 2 one which is switched at a low switching temperature, has a small size and consumes low power. As an example, it was possible to use as the positive characteristic thermistor one having a switching temperature of 180°C, lower than the prior art switching temperature of 220°C by 40°C, having a diameter of 7 mm and a thickness of 3 mm and consuming power of 2.8 W.

Further, since the case and lid 6 of the outer fitting accommodating the positive characteristic thermistor 2 is made of an electric insulator material, it is possible to reliably electrically insulate and protect the thermistor 2.

Further, since the electrode terminals 3 and 4 are connected inside the outer fitting constituted by the case 1 and lid 6 to the electrodes 22 and 23 of the positive characteristic thermistor 2 and led out to the outside of the outer fitting, it is possible to supply power to the thermistor 2 through the electrode terminals 3 and 4 without possibility of spoiling the electric insulation and protection functions with respect to the thermistor 2.

Further, since the positive characteristic thermistor 2 has its electrodes 22 and 23 provided on its opposite principal surfaces and is disposed in the recess 13 of the cases 1 such that its principal surfaces are directed toward the bottom 11 and the opening 12 of the case, respectively, heat generated in the positive characteristic thermistor 2 is mostly radiated toward the side of the bottom 11 and the opposite side of the opening 12 of the case 1.

Further, since the electrode terminals 3 and 4 are led out to the outside of the outer fitting through the opening 12, there is no need of forming any hole or aperture in the bottom 11 of the case 1 for leading the electrode terminals 3 and 4 through the bottom 11, and the bottom 11 is perfectly sealed. Since the cylindrical heat radiation member 51 of the heat radiator 5 is disposed on the outer surface of this sealed bottom 11, it is possible to perfectly prevent the liquid chemical, which is dispersed or dripped from the liquid withdrawal wick 8 inserted in the cylindrical heat radiation member 51 of the heat radiator 5, from intruding into the recess 13 of the case 1. It is thus possible to prevent deterioration of the positive characteristic thermistor 2 due to intrusion of liquid chemical and thus ensure enhanced reliability.

Further, since the heat radiator 5 is retreated in its portions corresponding to the electrode terminals 3 and 4 by ΔD1 and Δ D2 in the direction of increasing its distance from the electrode terminals 3 and 4, it is possible to improve the electric insulation between the electrode terminals 3 and 4 and heat radiator 5 and thus ensure enhanced reliability.

Further, the electrode terminal 3 has such a structure that its electrode contact portion 31 in surface contact with the electrode 22 of the positive characteristic thermistor 2 and its terminal portion 33 are united together by the narrow portion 32, which extends along and at a spacing from one edge of the contact portion 31 and is adapted to be broken by an over-current. With deterioration of the Positive characteristic thermistor 2, an over-current flows in it under a thermal equilibrium condition, under which intrinsically a low current should flow. Such over-current causes damage or abnormal heat generation to the positive characteristic thermistor 2 and a possible fire accident resulting therefrom, and is thus very hazardous. Accordingly, in this embodiment the electrode terminal 3 is provided with the narrow portion 32 which is adapted to be broken by an over-current, thus providing protection against over-current.

The case 1 has another recess 14, which is distinct from the recess 13 and is formed such as to correspond in position to the narrow portion 32 of the electrode terminal 3. In assembling, the narrow portion 33 of the electrode terminal 3 is located in the recess 14, and both the recesses 13 and 14 are then closed by the lid 6. With this structure, when the narrow portion 32 is broken by an over-current, the molten metal is retained in the recess 14 and not spattered into the inside of the recess 13, in which the positive characteristic thermistor 2 is accommodated. It is thus possible to eliminate a short-circuit between the electrodes 22 and 33 due to otherwise possible attachment of molten metal to the outer periphery of the positive characteristic thermistor 2. The narrow portion 32 is disposed such that it is spaced apart from the wall surfaces of the recess 14. With this arrangement, it is possible to suppress heat radiation from the narrow portion 32 and cause reliable breakage thereof with a predetermined breakage over-current level.

The terminal portion 33 of the electrode terminal 3 has the raised portion 330 raised from one side toward the other side. With this arrangement, it is possible to make the thickness of the electrode terminal 3, which has to use a thin plate corresponding to the breakage over-current level, and the thickness of the electrode terminal 4 which does not, substantially identical with the raised portion 330. Thus, it is possible to connect identical terminals to the electrode terminals 3 and 4 for the connection thereof to external leads.

Besides, since the electrode terminals 3 and 4 have holes 331 and 431 formed near their end, a retaining structure may be formed with the connection terminals and holes 331 and 431.

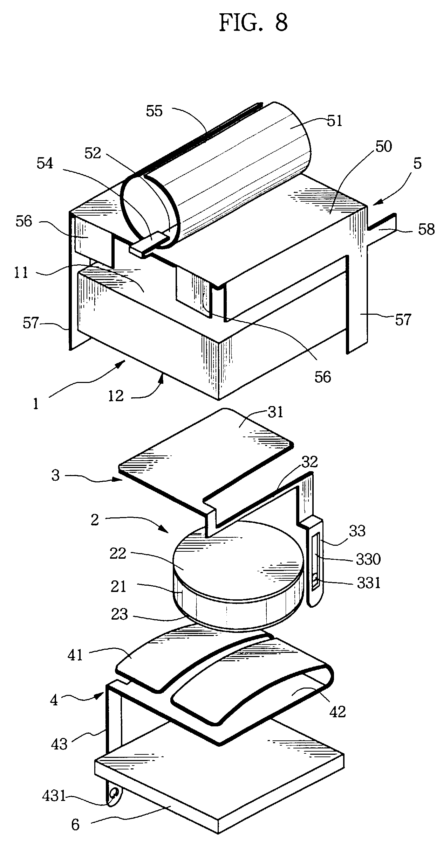

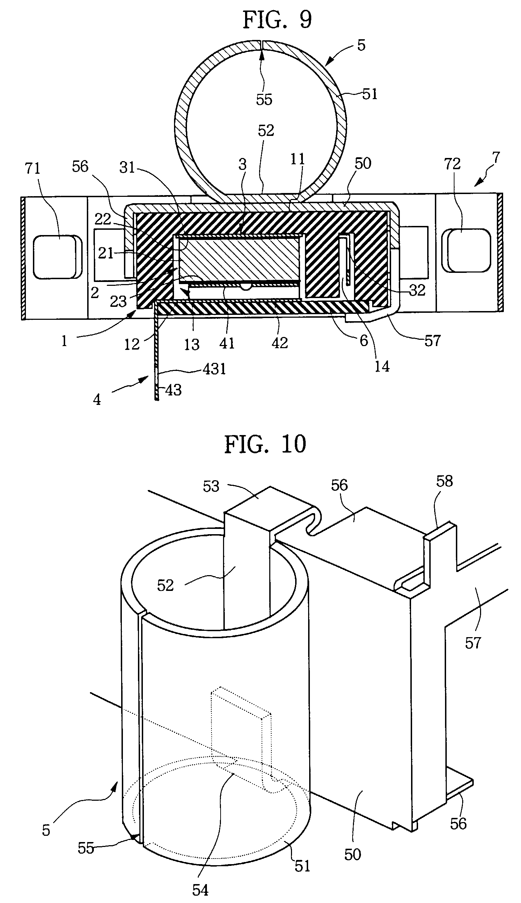

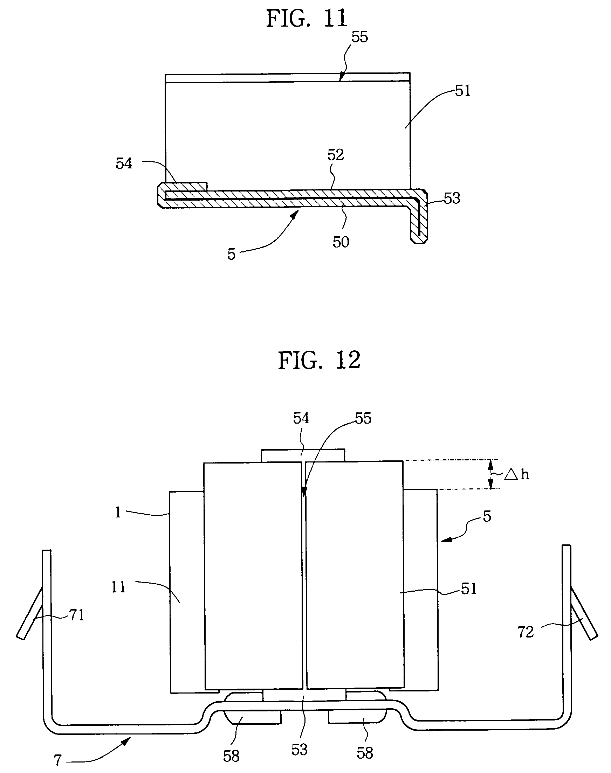

Now, a modification of the above embodiment of the positive characteristic thermistor device according to the invention will be described with reference to Figs. 8 to 13. In the Figures, parts like those in Figs. 1 to 7 are designated by like reference numerals. In this modification, a heat radiator 5, as shown in Figs. 8 and 9, has a heat collection member 50 and a cylindrical heat radiation member 51. The heat collection member 50 is disposed in surface contact with the bottom 11, while the outer periphery of the cylindrical heat radiation member 51 is in contact with the surface of the heat collector 50. The heat radiator 5, as shown in Figs. 10 and 11, is made from a plate of a good heat conductor metal, for instance an aluminum plate, and it has positioning arm portions 56, securing arm portions 57, and arm portions 58 for securing mounting member, these portions extending from the heat collection member 50. The cylindrical heat radiation member 51 has a bent portion 53 extending from one end of it and joining the heat collection member 50, and its other end held by a folding member 54 extending from the heat collection member 50 and being folded back to be in contact with its inner periphery. Its flat heat coupling portion 52 extending substantially over its entire length is substantially in surface contact with the surface of the heat collection member 50. A thermally conductive resin such as a silicone resin is desirably provided between the heat coupling portion 52 and the heat collection member 50.

In the instance shown in Fig. 12, length of axial dimension of the cylindrical heat radiation member 51 is greater than in the case of Figs. 1 to 7 by Δ h, indicating that the amount of dispersion of the liquid chemical is adjsutable by adjusting the length of the cylindrical heat radiation member 51. The direction of the length adjustment may be on the side of the mounting member 7. The length adjustment may be in a direction of reducing the length.

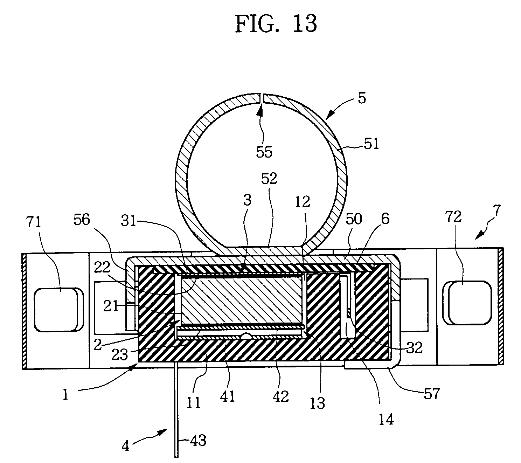

In the instance of Fig. 13, the electrode terminal 4 is disposed on the side of the bottom 11 of the case 1, the positive characteristic thermistor 2, electrode terminal 3 and lid 6 are stacked in the mentioned order on the electrode terminal 4, and the heat radiator 5 is disposed on the opening side, on which the lid 6 is located. Although not shown, it is possible to dispose the cylindrical heat radiation member 51 on one side of the case 1.

### INDUSTRIAL APPLICABILITY

As has been described in the foregoing, according to the invention the following effects can be obtained.
(a) Since the positive characteristic thermistor is accommodated in and thermally coupled to the outer fitting while the heat radiator has the flat heat coupling portion in surface contact with the outer surface of the outer fitting, it is possible to provide a positive characteristic thermistor device, which has high efficiency of heat conduction from the positive characteristic thermistor to the cylindrical heat radiation member and is suited for reducing the size and power consumption.
(b) Since the positive characteristic thermistor is accommodated in the outer fitting made of an electric insulator material, it is possible to provide a positive characteristic thermistor device, which can ensure reliable electric insulation and protection of the positive characteristic thermistor.
(c) Since the electrode terminals are connected within the outer fitting to the positive characteristic thermistor electrodes and led to the outside of the outer fitting, it is possible to provide a positive characteristic thermistor device, which permits power to be supplied to the positive characteristic thermistor via the electrode terminals without spoiling the electric insulation and protection functions with respect to the thermistor.

## Claims

1. A positive characteristic thermistor device comprising: an outer fitting (1,6); a positive characteristic thermistor (2) being accommodated in and thermally coupled to said outer fitting (1,6); electrode terminals (3,4) being connected in said outer fitting to electrodes (22,23) of said positive characteristic thermistor (2) and led out to the outside thereof; a heat radiator (5) having a cylindrical heat radiation member (51); and characterised in that the outer fitting is made of an electrical insulator material and in that the cylindrical heat radiation member (51) has a flat heat coupling portion (52) in surface contact with an outer surface (11) of said outer fitting (1,6).

2. The positive characteristic thermistor device according to claim 1, wherein said outer fitting (1,6) includes a case (1) and a lid (6), said case having a bottom (11) and a recess (13) open opposite said bottom, said lid (6) closing said opening (12) of said case (1), said positive characteristic thermistor (2) having electrodes (22,23) provided on opposite principal surfaces and being disposed in said recess (13) such that said principal surfaces are directed toward said bottom (11) and said opening (12), respectively.

3. The positive characteristic thermistor device according to claim 2, wherein said cylindrical heat radiation member (51) of said heat radiator (5) is disposed on the outer surface of the bottom (11) of said case (1).

4. The positive characteristic thermistor device according to claim 3, said cylindrical heat radiation member (51) of said heat radiator (5) has folding portions (53,54) extending from each axial end of it, said folding portions being folded back such as to embrace said outer fitting (1,6).

5. The positive characteristic thermistor device according to claim 4, wherein said folding portions (53,54) of said heat radiator (5) have their portions corresponding to said electrode terminals (3,4) arranged to increase their distance away from said electrode terminals (3,4).

6. The positive characteristic thermistor device according to one of claims 1 to 5, wherein said heat radiator (5) includes a heat collection member (50), said heat collection member (50) being disposed on an outer surface of said outer fitting (1,6), the outer periphery of said cylindrical heat radiation member (51) being in contact with a surface of said heat collection member (50).

7. The positive characteristic thermistor device according to claim 6, wherein said cylindrical heat radiation member (51) has one end joined to said heat collection member and the other end held by a folding member (54) extending from said heat collection member and folded to be in contact with its inner periphery.

8. The positive characteristic thermistor according to one of claims 1 to 5 and 7, wherein a thermally conductive resin is provided between said heat coupling portion (52) and said outer fitting (1,6) or said heat collection member (50).

9. The positive characteristic thermistor device according to claim 1, wherein two electrode terminals are provided as said electrode terminals (3,4), one of said electrode terminals (3) having a portion (32) to be broken by an over-current.

10. The positive characteristic thermistor device according to claim 9, wherein said one of said electrode terminals (3) has a contact portion (31) in surface contact with an electrode (22 or 23) of said positive characteristic thermistor (2) and a terminal portion (33) led to the outside of said outer fitting (1,6), said portion (32) to be broken by an over-current being a narrow portion (32) joining together said contact portion (31) and said terminal portion (33).

11. The positive characteristic thermistor according to claim 10, wherein said one of said electrode terminals (3) has a thickness smaller than the thickness of said other electrode terminal (4), said terminal portion (33) having a raised portion (330) to provide for an substantialy uniform thickness.

12. The positive characteristic thermistor device according to claim 1, which further comprises a mounting member (7) made from a metal plate, said mounting member being secured to said outer fitting via said heat radiator (5).

13. The positive characteristic thermistor device according to claim 12, wherein said heat radiator (5) has at least one arm portion (58), said mounting member (7) having a hole, said mounting member (7) being secured with said arm portion (58) fitted in said hole.

14. Use of a thermistor as claimed in any preceding claim for heating a liquid withdrawal wick disposed in the cylindrical heat radiation member.

15. Use as claimed in claim 14 wherein the liquid comprises an insecticide.

16. Use as claimed in claim 14 or 15 wherein the switching temperature of the positive characteristic thermistor is 180°C.

## Patentansprüche

1. Thermistorvorrichtung mit positiver Kennlinie, umfassend: eine äußere Halterung (1, 6), einen in der äußeren Halterung (1, 6) untergebrachten und an diese thermisch angekoppelten Thermistor (2) mit positiver Kennlinie, in der äußeren Halterung mit Elektroden (22, 23) des Thermistors (2) mit positiver Kennlinie verbundene und zu dessen Außenseite herausgeführte Elektrodenanschlüsse (3, 4) und einen Wärmestrahler (5) mit einem zylindrischen Wärmestrahlerelement (51), dadurch gekennzeichnet, daß die äußere Halterung aus einem elektrischen Isoliermaterial geformt ist und daß das zylindrische Wärmestrahlerelement (51) einen mit leiner Außenfläche (11) der äußeren Halterung (1, 6) in Flächenkontakt stehenden, flachen Wärmekopplungsabschnitt (52) aufweist.

2. Thermistorvorrichtung mit positiver Kennlinie nach Anspruch 1, wobei die äußere Halterung (1, 6) ein Gehäuse (1) und einen Deckel (6) aufweist, das Gehäuse einen Boden (11) und eine dem Boden gegenüberliegende Ausnehmung (13) aufweist, der Deckel (6) die Öffnung (12) des Gehäuses (1) verschließt, (und) der Thermistor (2) mit positiver Kennlinie Elektroden (22, 23) aufweist, die an gegenüberliegenden Hauptflächen vorgesehen und in der Ausnehmung (13) so angeordnet sind, daß die Hauptflächen zum Boden (11) bzw. zur Öffnung (12) hin gerichtet sind.

3. Thermistorvorrichtung mit positiver Kennlinie nach Anspruch 2, wobei das zylindrische Wärmestrahlerelement (51) des Wärmestrahlers (5) an der Außenfläche des Bodens (11) des Gehäuses (1) angeordnet ist.

4. Thermistorvorrichtung mit positiver Kennlinie nach Anspruch 3, wobei das zylindrische Wärmestrahlerelement (51) des Wärmestrahlers (5) von jedem seiner axialen Enden abgehende Abbiegungsabschnitte (53, 54) aufweist, die so zurück- bzw. umgebogen sind, daß sie die äußere Halterung (1, 6) umfassen.

5. Thermistorvorrichtung mit positiver Kennlinie nach Anspruch 4, wobei die Abbiegungsabschnitte (53, 54) des Wärmestrahlers (5) mit ihren den Elektrodenanschlüssen (3, 4) entsprechenden Teilen so angeordnet sind, daß sich ihr Abstand von den Elektrodenanschlüssen (3, 4) hinweg vergrößert.

6. Thermistorvorrichtung mit positiver Kennlinie nach einem der Ansprüche 1 bis 5, wobei der Wärmestrahler (5) ein Wärmesammelelement (50), das an einer Außenfläche der äußeren Halterung (1, 6) angeordnet ist, aufweist und der Außenumfang des zylindrischen Wärmestrahlerelements (51) mit einer Oberfläche des Wärmesammelelements (50) in Berührung bzw. Kontakt steht.

7. Thermistorvorrichtung mit positiver Kennlinie nach Anspruch 6, wobei das zylindrische Wärmestrahlerelement (51) am einen Ende mit dem Wärmesammelelement verbunden und am anderen Ende durch ein Abbiegungselement (54), das vom Wärmesammelelement abgeht und zum Kontaktieren von dessen Innenumfang abgebogen ist, gehalten ist.

8. Thermistorvorrichtung mit positiver Kennlinie nach einem der Ansprüche 1 bis 5 und 7, wobei zwischen dem Wärmekopplungsabschnitt (52) und der äußeren Halterung (1, 6) oder dem Wärmesammelelement (50) ein wärmeleitendes Harz vorgesehen ist.

9. Thermistorvorrichtung mit positiver Kennlinie nach Anspruch 1, wobei als die Elektrodenanschlüsse (3, 4) zwei Elektrodenanschlüsse vorgesehen sind, von denen der eine Elektrodenanschluß (3) einen durch einen Überstrom unterbrechbaren Abschnitt (32) aufweist.

10. Thermistorvorrichtung mit positiver Kennlinie nach Anspruch 9, wobei der eine der Elektrodenanschlüsse (3) einen mit einer Elektrode (22 oder 23) des Thermistors (2) mit positiver Kennlinie in Flächenkontakt stehenden Kontaktabschnitt (31) und einen zur Außenseite der äußeren Halterung (1, 6) herausgeführten Anschlußabschnitt (33) aufweist, wobei der durch einen Überstrom unterbrechbare Abschnitt (32) ein den Kontaktabschnitt (31) und den Anschlußabschnitt (33) miteinander verbindender schmaler Abschnitt (32) ist.

11. Thermistorvorrichtung mit positiver Kennlinie nach Anspruch 10, wobei der eine der Elektrodenanschlüsse (3) eine Dicke aufweist, die kleiner ist als die Dicke des anderen Elektrodenanschlusses (4), und der Anschlußabschnitt (33) einen erhabenen oder hochgezogenen Abschnitt (330) zur Gewährleistung einer im wesentlichen gleichmäßigen Dicke aufweist.

12. Thermistorvorrichtung mit positiver Kennlinie nach Anspruch 1, ferner umfassend ein aus Metallblech geformtes Anbauelement (7), das über den Wärmestrahler (5) an der äußeren Halterung befestigt ist.

13. Thermistorvorrichtung mit positiver Kennlinie nach Anspruch 12, wobei der Wärmestrahler (5) mindestens ein Armteil (58) aufweist, das Anbauelement (7) eine Öffnung aufweist und das Anbauelement (7) mit dem in die Öffnung eingesetzten Armteil (58) befestigt ist.

14. Verwendung eines Thermistors nach einem der vorangehenden Ansprüche zum Erwärmen eines im zylindrischen Wärmestrahlerelement angeordneten Flüssigkeitsabziehdochts.

15. Verwendung nach Anspruch 14, wobei die Flüssigkeit ein Insektizid ist.

16. Verwendung nach Anspruch 14 oder 15, wobei die (Ein-)Schalttemperatur des Thermistors mit positiver Kennlinie 180°C beträgt.

## Revendications

1. Dispositif à thermistance à coefficient de température positif, comprenant : une monture extérieure (1, 6) ; une thermistance à coefficient de température positif (2) logée dans ladite monture extérieure (1, 6) et thermiquement reliée à celle-ci ; des bornes d'électrode (3, 4) reliées dans ladite monture extérieure aux électrodes (22, 23) de ladite thermistance à coefficient de température positif (2) et à sortie vers l'extérieur de celle-ci ; un radiateur de chaleur (5) comportant un élément cylindrique de rayonnement thermique (51) ; et caractérisé en ce que la monture extérieure est faite en une matière électriquement isolante et en ce que l'élément cylindrique de rayonnement thermique (51) présente une partie plate de couplage thermique (52) en contact de surface avec une surface extérieure (11) de ladite monture extérieure (1, 6).

2. Dispositif à thermistance à coefficient de température positif selon la revendication 1, dans lequel ladite monture extérieure (1, 6) comporte un boîtier (1) et un couvercle (6), ledit boîtier ayant un fond (11) et une cavité (13) ouverte à l'opposé dudit fond, ledit couvercle (6) fermant ladite ouverture (12) dudit boîtier (1), ladite thermistance à coefficient de température positif (2) ayant des électrodes (22, 23) situées sur ses faces principales opposées et étant disposée dans ladite cavité (13) de telle manière que lesdites faces principales soient dirigées respectivement vers ledit fond (11) et vers ladite ouverture (12).

3. Dispositif à thermistance à coefficient de température positif selon la revendication 2, dans lequel ledit élément cylindrique de rayonnement thermique (51) dudit radiateur de chaleur (5) est disposé sur la face extérieure du fond (11) dudit boîtier (1).

4. Dispositif à thermistance à coefficient de température positif selon la revendication 3, dans lequel ledit élément cylindrique de rayonnement thermique (51) dudit radiateur de chaleur (5) présente des parties repliables (53, 54) s'étendant à partir de chaque extrémité axiale de celui-ci, lesdites parties repliables étant rabattues de manière à entourer ladite monture extérieure (1, 6).

5. Dispositif à thermistance à coefficient de température positif selon la revendication 4, dans lequel lesdites parties repliables (53, 54) dudit radiateur de chaleur (5) ont leurs parties, qui correspondent auxdites bornes d'électrode (3, 4), prévues pour augmenter leur distance par rapport auxdites bornes d'électrode (3, 4).

6. Dispositif à thermistance à coefficient de température positif selon l'une quelconque des revendications 1 à 5, dans lequel ledit radiateur de chaleur (5) comporte un élément collecteur de chaleur (50), ledit élément collecteur de chaleur (50) étant placé sur une face extérieure de ladite monture extérieure (1, 6), la périphérie extérieure dudit élément cylindrique de rayonnement thermique (51) étant en contact avec une surface dudit élément collecteur de chaleur (50).

7. Dispositif à thermistance à coefficient de température positif selon la revendication 6, dans lequel ledit élément cylindrique de rayonnement thermique (51) a une extrémité reliée audit élément collecteur de chaleur, tandis que son autre extrémité est maintenue par un élément repliable (54) qui s'étend à partir dudit élément collecteur de chaleur et qui est rabattu pour être en contact avec sa périphérie intérieure.

8. Dispositif à thermistance à coefficient de température positif selon l'une des revendications 1 à 5 et 7, dans lequel une résine thermiquement conductrice est placée entre ladite partie de couplage thermique (52) et ladite monture extérieure (1, 6) ou ledit élément collecteur de chaleur (50).

9. Dispositif à thermistance à coefficient de température positif selon la revendication 1, dans lequel il est prévu deux bornes d'électrode en tant que dites bornes d'électrode (3, 4), l'une (3) desdites bornes d'électrode ayant une partie (32) destinée à être rompue par une surintensité.

10. Dispositif à thermistance à coefficient de température positif selon la revendication 9, dans lequel l'une (3) desdites bornes d'électrode a une partie contact (31) en contact de surface avec une électrode (22 ou 23) de ladite thermistance à coefficient de température positif (2), et une partie borne (33) s'étendant vers l'extérieur de ladite monture extérieure (1, 6), ladite partie (32) destinée à être rompue par une surintensité, étant une partie étroite (32) qui relie l'une à l'autre ladite partie contact (31) et ladite partie borne (33).

11. Dispositif à thermistance à coefficient de température positif selon la revendication 10, dans lequel l'une (3) desdites bornes d'électrode a une épaisseur plus faible que l'épaisseur de l'autre (4) desdites bornes d'électrode, ladite partie borne (33) ayant une partie en saillie (330) pour assurer une épaisseur sensiblement uniforme.

12. Dispositif à thermistance à coefficient de température positif selon la revendication 1, qui comprend en outre un élément de fixation (7), fait à partir d'une plaque métallique, ledit élément de fixation étant fixé à ladite monture extérieure au moyen dudit radiateur de chaleur (5).

13. Dispositif à thermistance à coefficient de température positif selon la revendication 12, dans lequel ledit radiateur de chaleur (5) comporte au moins une partie formant bras (58), ledit élément de fixation (7) présentant un trou et ledit élément de fixation (7) étant monté au moyen de ladite partie formant bras (58) logée dans ledit trou.

14. Utilisation d'une thermistance selon l'une quelconque des revendications précédentes pour le chauffage d'une mèche d'extraction de liquide, placée dans l'élément cylindrique de rayonnement thermique.

15. Utilisation selon la revendication 14, dans laquelle le liquide comprend un insecticide.

16. Utilisation selon la revendication 14 ou 15, dans laquelle la température de commutation de la thermistance à coefficient de température positif est de 180 °C.
